# EUROPEAN PATENT APPLICATION

(11) **EP 4 539 188 A1**
(43) Date of publication of application: **16.04.2025**
(21) Application number: 23202749.0
(22) Date of filing: 10.10.2023
(51) Int. Cl.: H01M 10/054, H01M 50/429, H01M 50/44, H01M 50/46, C09D 101/28

(54) **SEPARATOR FOR A SODIUM ION CELL**

(71) Applicant: Northvolt AB, 112 47 Stockholm (SE); Altris AB, 753 18 Uppsala (SE)
(72) Inventor: Hess, Lars Henning, 722 19 Västerås (SE); Ruben-Maça, Rudi, 722 20 Västerås (SE)
(74) Representative: Engman, Eva Jessica

(57) **Abstract**

The disclosure provides a method of forming a separator on an electrode of a sodium ion cell, and to an electrode/separator composite and to a cell comprising said separator. In particular, the separator is made using methods which dispose a cellulose based separator layer directly onto an electrode.

## Description

### FIELD OF THE INVENTION

The disclosure relates to a method of forming a separator on an electrode in a sodium ion cell, to an electrode/separator composite, and to a cell comprising said separator.

### BACKGROUND

Increasing concerns regarding the sustainability of lithium sources, due to their limited availability and consequent expected price increase, have raised awareness of the importance of developing alternative energy-storage candidates that can sustain the ever-growing energy demand. Furthermore, limitations on the availability of certain transition metals used in the manufacturing of cathode materials typically used in lithium ion cells, together with questionable mining practices, are driving development towards more sustainable elements.

Sodium ion batteries (Na-ion batteries) promise to revolutionise the area of low-cost, safe, and rapidly scalable energy-storage technologies. The use of raw elements, obtained ethically and sustainably from inexpensive and widely abundant sources, makes this technology extremely attractive, especially in applications where weight/volume are not of concern.

A Na-ion battery comprise two electrodes (the cathode and the anode) which are separated by a separator. A separator is typically a permeable membrane, which has a main function of keeping the two electrodes apart to prevent electrical short circuits while also allowing the transport of sodium ions that are needed to close the circuit during the passage of current in an electrochemical cell.

Aside from being chemically stable, a separator for a Na-ion battery also needs good thermal stability given that elevated temperatures are required to remove liquids (particularly water) prior to refilling with electrolyte and sealing of the cell.

This has led to an increased interest in cellulose-based separators as these possess very good thermal stability. However, pure cellulose separators have poor tensile strength, which limits their applicability.

There is therefore a need for overcoming the problems of poor tensile strength for cellulose-based separators.

### SUMMARY

The object of the present disclosure is to provide a method of forming a cellulose based separator. In particular, the separator is formed on an electrode of a sodium ion battery.

A aspect of the disclosure is a process of forming a separator on an electrode active layer of a sodium-ion-based electrode comprising the steps of:
a. providing a cellulose composition comprising solvent and cellulosic material;
b. depositing said cellulose composition on to an electrode active layer of a sodium-ion-based electrode to form a separator;
wherein said separator comprises a nonwoven web of cellulosic fibres.

A further aspect of the disclosure is a composite comprising an electroactive layer and a separator adhered thereon, as formed by the above method.

A further aspect of the disclosure is a composite comprising a foil coated with an electrode active layer and separator adhered to the electroactive layer is formed, said separator comprising a nonwoven layer of cellulosic fibres, and said electrode active layer is an electrode active layer of a sodium-ion-based electrode.

### DETAILED DESCRIPTION

The disclosure relates to a method of forming a separator on an electrode active layer of a sodium ion battery. Further, the disclosure relates to an electrode/separator composite, and a cell comprising said separator.

### ELECTRODE ACTIVE LAYER

In the context of this disclosure, an "electrode active layer" is a layer comprising binder, electrode active material, and optionally conductive additives.

To produce an electrode active layer, electrode active material, a binder and optionally a conductive additive are typically dispersed in a dispersant to form a slurry. The slurry is then deposited on a current collector to form the electrode active layer.

The term "electrode active material" is to be understood as an electrochemical species which can be oxidized and reduced in a system which enables a cell to produce electric energy during discharge.

The electrode active material may be either cathode active material or anode active material.

An "anode active layer" is a layer comprising binder, anode active material, and optionally conductive additives.

A "cathode active layer" is a layer comprising binder, cathode active material, and optionally conductive additives.

Each of the components within an electrode active layer will be described below:

### Binder

The binder adhesively connects all the electrode materials for long-term charge/discharge cycling. The role of the optional conductive additive is to improve the electronic properties of the cathode and to provide an electrical connection between the particles of cathode active material in the cathode.

Suitable binders are well known in the art and may be water-insoluble or water-soluble.

Examples of binders for a sodium ion battery include styrene butadiene rubber (SBR), carboxymethyl cellulose (CMC), sodium lignosulfonate (NaLS or LgSA), sodium alginate, polyvinylidene fluoride (PVDF), polyacetylene, sodium carboxymethyl cellulose (Na-CMC), polyacrylic acid (PAA), sodium polyacrylate (PANa), polytetrafluoro ethylene (PTFE), hexafluoro propylene (HFP), or any combination thereof.

Preferably, the binder comprises carboxymethyl cellulose (CMC), styrene butadiene rubber (SBR), and/or a combination thereof. Even more preferred, the binder comprises both carboxymethyl cellulose (CMC) and styrene butadiene rubber (SBR).

The electrode active layer may comprise, by weight, from 0.01-10 wt% binder, for example from about 0.02-8 wt%, from about 0.05-6 wt%, or from about 0.06-4 wt% binder. Preferably the cathode active layer comprises from about 0.1 to 3 wt% binder, even more preferably 0.2 wt% to 2 wt% binder, such as from 0.5 wt% to 1.5 wt% binder. Most preferably the electrode active layer comprises about 1 wt% binder.

### Conductive additives

Suitable conductive additives include acetylene black, carbon black, graphene, graphite, mesocarbon microbead (MCMB), pitch-based carbon, coke powders, carbon nanotubes or metallic powders. These conductive additives may be used alone or in combination.

Preferred conductive additives are selected from carbon black, graphite, carbon nanotubes, or mixtures thereof.

In an embodiment, the cathode active layer may comprise from 0-10 wt% conductive additive, for example from about 0.01-8 wt%, from about 0.05-6 wt%, or from about 0.06-4 wt% conductive additive. Preferably the cathode active layer comprises from about 0.1 to 3 wt% conductive additive, even more preferably 0.2 wt% to 2 wt% conductive additive, such as from 0.5 wt% to 1.5 wt% conductive additive. Most preferably the cathode active layer comprises about 1 wt% conductive additive.

In an embodiment, the anode active layer may comprise from 0-10 wt% conductive additive, for example from about 0.01-8 wt%, from about 0.05-6 wt%, or from about 0.06-4 wt% conductive additive. Preferably the anode active layer comprises from about 0.5 to 3 wt% conductive additive.

Typically, when the anode active material comprises graphite, no conductive additive is needed. Other carbon based anode active materials such as hard carbon often require a conductive additive to be included.

### Cathode active material

The role of the cathode active material is to reversibly intercalate ions (such as sodium ions) during cell charge and discharge cycles.

The cathode active material of the disclosure is an intercalation material, wherein the intercalation metal is sodium.

In the context of the disclosure "cathode active material" refers to any material that is suitable for use as the positive electrochemically active material in a cathode, and suitable for use in a cell.

The cathode active material may comprise any one or a mixture of two or more sodium metal, sodium containing alloys, sodium containing oxides, sodium containing cyanides, or any combination thereof.

Preferably, the cathode active material comprises sodium transition metal cyanides having six cyanide groups per formula unit. Each of these cyanide groups connect transition metals within the cathode active material to form a framework with large voids that allow intercalation and de-intercalation of sodium-ions.

Exemplary sodium transition metal cyanides include Prussian Blue (PB) and its derivatives, i.e. Prussian Blue Analogues (PBA). Even more preferably, the cathode active material comprises Prussian Blue Analogues (PBA).

Exemplary Prussian blue analogues include Prussian White, Turnbull's blue, potassium ferricyanide, and potassium ferrocyanide.

In some embodiments, the cathode active material comprises Prussian Blue Analogoues (PBAs) having a formula of AₓP_{y}[R_{z}(CN)₆]_{w}, where A is a sodium ion, and P and R are transition metals. Prussian Blue Analogues (PBA) offer many opportunities for structural variation and hence the properties are highly tunable. For example, the stoichiometry may vary: 1<x<2, 0<y<2, 1<z<2, and 1<w<2.

The transition metals P and R may each be selected from manganese (Mn), Iron (Fe), Aluminium (Al), Titanium (Ti), Nickel (Ni), Vanadium (V) and Cobalt (Co). Preferably, R is iron (Fe).

Preferred are Prussian Blue Analogues (PBA) selected from Fe-Fe-PBA, Mn-Fe-PBA, Fe-Ni-PBA, Ni-PBA, Co-PBA, or any combination thereof, especially Fe-Fe-PBA.

Prussian Blue Analogous (PMA) may be complexed to water.

In the cathode active layer, the cathode active material is typically present in an amount of, by weight, from about 60-99.9 wt% active material, for example from about 70-99.9 wt%, from about 80-99.8 wt%, from about 90-99.6 wt%, or from about 95-99.5 wt% active material. Preferably the cathode active layer comprises from about 96-99.5 wt% active material, even more preferably the cathode active layer comprises about 98 wt% active material.

### Anode active material

The role of the anode active material is to reversibly bind ions (such as sodium ions) during cell charge and discharge cycles.

In the context of the disclosure "anode active material" refers to any material that is suitable for use as the negative electrochemically active material in a cathode, and suitable for use in a cell.

The anode active material may comprise any one or a mixture of two or more of carbon black, hard carbon or graphite.

Preferably, the anode active material comprises hard carbon.

In the anode active layer, the anode active material is typically present in an amount of, by weight, from about 60-99.9 wt% active material, for example from about 70-99.9 wt%, from about 80-99.8 wt%, from about 90-99.6 wt%, or from about 95-99.5 wt% active material. Preferably the anode active layer comprises from about 96-99.5 wt% active material, even more preferably the anode active layer comprises about 98 wt% active material.

### ELECTRODE FORMATION

To produce an electrode of a sodium-ion battery, a slurry with all the necessary components is formed. Typically, the slurry comprises electrode active material, binder, dispersing medium, and optionally conductive additive. The addition of a dispersing medium allows for easy preparation of the electrode.

Suitable dispersing media are capable of dispersing the various components in the slurry without leading to undesirable side reactions or degradation of the components. Suitable dispersing medium include NMP (N-methyl pyrrolidone), DMSO (dimethyl sulphoxide), DMF (dimethylformamide), and water.

Preferably, the dispersing medium is NMP (N-methyl pyrrolidone).

The slurry composition is formulated to a suitable viscosity to allow it to be processed into an electrode, for example by slot-die coating.

The slurry composition typically has a dynamic viscosity of from about 2 to about 50 Pa.s, for instance from about 5 to about 40 Pa.s or from about 5 to about 25 Pa.s, as measured at 25°C.

The slurry composition typically contains from about 50 to 90 wt% solids, such as from about 60 to 80 wt% solids, preferably from about 68 to 73 wt% solids, with the remainder being dispersing medium.

In an embodiment, a slurry for forming an electrode comprises dispersing medium, electrode active material, a binder, and optionally conductive additive.

The slurry is deposited on a foil. Preferably, the foil is an aluminium foil.

Upon drying an electrode comprising a foil and an electrode active layer is formed. Drying is typically done in an oven at elevated temperature, for example at a temperature between about 40°C and 120°C, such as between about 60°C and 100°C, for example between 70°C and 90°C.

Typically, the electrode then undergoes calendering to compact the electrode active layer. Calendering typically involves passing the electrode through heated rollers. In doing so, an electrode active layer having more uniform thickness and density is formed, for example the thickness may be determined by the calendering process. Calendering improves electrode adhesion and density and increases the electrical conductivity between particles.

For example, an electrode may be formed using a process comprising the following steps:
1. providing a foil and a dispersion comprising a solvent, electrode active material, binder, and optionally conductive additives;
2. disposing said dispersion onto said foil to provide a coated foil;
3. calendering the coated foil to provide an electrode comprising a foil and an electrode active layer.

Optionally, the electrode forming process may include a heating step, either before, after or during calendering, or any combination of these possibilities.

### SEPARATOR

The separator of the disclosure is formed on the electrode active layer, for instance on the cathode active layer, anode active layer, or both.

A separator is typically a permeable membrane, whose main function is to keep the two electrodes apart to prevent electrical short circuits while also allowing the transport of sodium ions that are needed to close the circuit during the passage of current in an electrochemical cell.

Cellulose based materials typically used in sodium ion cells are environmentally friendly and have good thermal stability. Typically, when cellulose or derivatives thereof is used as a separator, a sheet of cellulose or a derivative thereof is disposed between the anode and the cathode during formation of the cell.

However, sheets of cellulose are typically fragile and prone to tearing, making it difficult handle during manufacture.

The present disclosure relates to a separator formed on the electrode active layer. This has the advantage that it is integral to the underlying layer, avoiding the issues with using separate cellulose sheets as a separator.

In an embodiment a process of forming a separator on an electrode active layer of a sodium-ion-based electrode is disclosed.

Without wishing to be bound by theory, it is believed that a separator formed directly on an electrode may advantageously improve adhesion to between said separator and said electrode compared to a preformed separator that is disposed between two electrodes. Improved adhesion between the separator and the electrode may further facilitate improved electrical performance of the energy storage device.

The separator of the disclosure comprises fibres comprising cellulose.

In the context of this disclosure, "fibres comprising cellulose" and "cellulosic fibres" are used interchangeably and are meant to mean fibres made from cellulose or a derivative thereof.

For example, the cellulosic fibres may comprise hemicellulose or carboxy methyl cellulose (CMC), or a combination thereof.

Alternatively or additionally, the cellulosic fibres may comprise regenerated cellulose.

Regenerated cellulose is a class of material manufactured by the conversion of natural cellulose to a soluble cellulosic derivative and subsequent regeneration to form a fibre. Regenerated cellulose includes many types of fibres such as lyocell and rayon.

Preferably, the cellulosic fibres comprise regenerated cellulose fibres such as lyocell and rayon.

In an embodiment of the invention, the separator comprises cellulosic fibres, wherein the cellulose fibres comprise hemicellulose, carboxy methyl cellulose (CMC), regenerated cellulose or a combination thereof, and wherein the regenerated cellulose may include fibres such as lyocell and/or rayon.

The separator may be formed on the cathode, the anode, or both.

In an embodiment, the separator is formed on the cathode.

In another embodiment, the separator is formed on the anode.

In yet another embodiment, the separator is formed on both the anode and the cathode.

In order to form the separator of the disclosure, a cellulose composition comprising cellulosic material and a solvent is sprayed onto the electrode active layer.

An embodiment of the invention provides a process of forming a separator on an electrode active layer of a sodium-ion-based electrode comprising the steps of:
a. providing a cellulose composition comprising solvent and cellulosic material;
b. depositing said cellulose composition on to an electrode active layer of a sodium-ion-based electrode to form a separator;
wherein said separator comprises a nonwoven web of cellulosic fibres.

By "cellulosic material" is meant any kind of material that comprises cellulose or derivatives thereof. For example hemicellulose, carboxy methyl cellulose (CMC), regenerated cellulose or a combination thereof, and wherein the regenerated cellulose may include fibres such as lyocell and/or rayon.

A related embodiment of the disclosure provides a process of forming a separator on an electrode active layer of a sodium-ion-based electrode comprising the steps of
1) providing a foil and a dispersion comprising a solvent, electrode active material, binder, and optionally conductive additives;
2) disposing said dispersion onto said foil to provide a coated foil;
3) calendering the coated foil to provide an electrode comprising a foil and an electrode active layer;
4) providing a cellulose composition comprising solvent and cellulosic material;
5) depositing said cellulose composition on to the electrode active layer;

wherein said separator comprises a nonwoven web of cellulosic fibres; and
wherein said electrode active layer is an electrode active layer of a sodium-ion-based electrode.

Optionally, the process may include a heating step, either before, after or during calendering, or any combination of these possibilities.

### Dispersed Cellulosic Fibres

In an embodiment of the disclosure, the cellulose composition comprises fibres of cellulosic material dispersed in the solvent.

In such embodiments, the depositing process (step b.) typically comprises spraying the cellulose composition on the surface of the electrode active layer. The spray comprises droplets containing the fibres which are deposited onto the surface of the electrode active layer.

While the solvent may evaporate as the droplet travels from the spray nozzle to the surface, typically the fibres of cellulosic material will be deposited on the surface with residual solvent still present. This provides some mobility to the fibres, as well as increases adhesion to other fibres and the underlying surface.

Suitable dispersing solvents may be selected from water, ethyl acetate, acetone, tetrahydrofuran, diethyl ether, methanol, ethanol or a combination thereof. Preferably, the dispersing solvent is chosen from water, ethyl acetate, acetone or a combination thereof, more preferably the dispersing solvent is chosen from ethyl acetate, acetone or a combination thereof.

The spray nozzle is typically oriented above the electrode active layer, with the spray droplets travelling downwards landing on the surface of the layer. The electrode active layer typically moves underneath the spray nozzle, with the spray nozzle being either fixed or moving to ensure an even deposition.

In an embodiment, the spray nozzle may be included in a production line to allow for a continuous production methodology.

The spray deposition may occur at room temperature, but more typically elevated temperatures are used. Elevated temperatures aid in removal of the solvent and facilitate rapid drying of the fibres after deposition.

For instance, the deposition may occur at from 40°C to 120°C, preferably from 50°C to 90°C such as from 60°C to 80°C.

The cellulose composition comprising fibres of cellulosic material dispersed in the solvent may additionally comprise a binder. The binder helps with adhesion of the deposited fibres, both to each and to the underlying electrode active layer.

The binder will typically be soluble or dispersible in the solvent, to ensure that it coats the cellulose fibres when the solvent evaporates.

Suitable binders include polyvinylalcohol (PVA), for instance having a number average molecular weight of 100,000 to 300,000 g/mol.

The binder may alternatively be an elastomer, either alone or in addition to PVA. Suitable elastomers include block copolymers such as polystyrene-polybutylene-polystyrene (SBS) block copolymer.

The binder should be present in sufficient quantities to facilitate interfibre adhesion between the cellulose fibres after deposition.

Typically the binder:cellulose fibre ratio (by weight) will be 1:4 to 2:1, preferably 1:2 to 3:2.

The cellulose composition may also include an additive to ensure the components remain dispersed during the spray deposition process. Suitable additives include mineral oil or silicone oil.

The cellulose composition used in the spray process typically comprises from about 10 to 30 wt% solids content, for instance from 15 to 25 wt% solids content.

As such, a typical cellulose composition used in the spray process comprises
- from 70 to 90 wt% solvent, such as ethyl acetate or acetone;
- from 5 to 15wt% cellulosic fibres;
- from 5 to 15 wt% binder, such as PVA and optionally SBS; and
- from 1 to 3 wt% additive, such as mineral oil or silicon oil.

The spray process typically uses a gas or gasified liquid (i.e. a low boiling ether solvent such as dimethyl ether) to eject the spray of cellulose composition.

### Cellulosic Fibre Formation

In an alternative embodiment, the process of the disclosure utilises a cellulose composition comprising cellulosic material dissolved in a solvent. In such embodiments, the cellulosic fibres are formed during deposition.

The solvent should preferably be chosen in such a way that it does not dissolve the electrode active layer (or at least does not substantially interact with the electrode active layer), but it should be able to dissolve cellulose or derivatives thereof. Some interaction of the solvent with the electrode active layer is acceptable, as this can lead to improved adhesion between the fibre and the electrode active layer. However, complete dissolution of the electroactive layer should be avoided.

Any solvent that is capable of dissolving cellulose may be used. For example, the solvent may comprise NaOH/CS₂, N-methylmorpholine-N-oxide (NMMO), LiCl/N, N-dimethylacetamide (DMAc), tetrabutylammonium fluoride/dimethyl sulfoxide (TBAF/DMSO) and NaOH/urea.

Preferably, the solvents used to dissolve cellulose or derivatives thereof is a solvent comprising an N-oxide functional group, for example N-Methylmorpholine N-oxide (NMO or NMMO), N,N-Dimethyl-amino-3,6-dioxotriethylen-N-Oxide, 2-(Dimethylamino)ethanol N-Oxide, 3-Methoxy-N-N-dimethyl-N-propylamine N-oxide, 3-Ethoxy-N,N-dimethyl-N-propylamine N-oxide, 2-Methoxy-1-N,N-dimethyl-ethyl-amine N-oxide, N,N-Dimethyl-amino-diglycol N-oxide, 2-Ethoxy-1-N,N-dimethyl-ethyl-amine N-oxide.

Even more preferably, the solvent comprises N-Methylmorpholine N-oxide (NMMO).

The deposition is typically conducted using a spinneret.

A spinneret is a device used to extrude a polymer solution such as the cellulose composition to form fibres. Streams of the cellulose composition exit via the spinneret into air leading to a phase inversion which allows the cellulosic polymer to solidify. The individual polymer chains tend to align in the fibre because of viscous flow.

The spinneret is typically placed above the electrode active layers so as to deposit the cellulose composition directly on said layer.

In an embodiment, the spinneret may be included in a production line to allow for a continuous production methodology.

For efficient use of the spinneret, the viscosity of the cellulose composition should be suitably controlled, otherwise problems during production may arise. For example, too low viscosities compromise mechanical properties of the fibres. Similarly, too high viscosities may lead to the viscosity of the spinning solution being higher and therefore, spinning will be slower. With a slower spinning velocity, lower draw ratios will be attained, which significantly alters the fibre structure and its properties.

Typically, intrinsic viscosities of the cellulosic material are in the range of from about 300 ml/g to about 440 ml/g, especially from about 320 ml/g to about 420 ml/g, more preferably from about 320 ml/g to about 400 ml/g are desirable.

The intrinsic viscosity may be determined in accordance with SCAN-CM 15:99 in a cupriethylenediamine solution, a methodology which is known to the skilled person and which can be carried out on commercially available devices, such as the device Auto PuIpIVA PSLRheotek available from psl-rheotek.

The zero shear viscosity of the cellulose composition (i.e. the solution of cellulosic material in solvent such as NMMO forced through the spinneret) will typically be from 5,000 Pa.s to 30,000 Pa.s at the spinning temperature, preferably from 10,000 Pa.s to 20,000 Pa.s.
To measure the zero-shear viscosity, a cone plate Rheometer from Anton Paar (Model 302e) with a Peltier temperature Plate from -10°C to 220°C is used. The cone plate has diameter of 50 mm and an angle of 1 degree. The measurement involves heating the cone plate to the spinning temperature, for instance 95°C, followed by application of the sample which is subsequently trimmed on the plate. The viscosity is measured at 0.1 s⁻¹.

The viscosity of the cellulose composition may be controlled in various ways. For example, the cellulose composition typically comprises blends of cellulosic materials with various degrees of polymerisation to achieve desired spinnability and fibre properties.

The drawn strands of cellulose composition are deposited on the surface of the electrode active layer to form a porous nonwoven layer. Typically, the material which is deposited contains residual solvent, which improves adhesion between the fibres and to the underlying surface.

The above process may be described as a solvent-spinning method.

The solvent-spinning method may occur at room temperature, but more typically elevated temperatures are used. Elevated temperatures aid in removal of the solvent and facilitate rapid drying of the fibres after deposition.

For instance, the deposition may occur at an air temperature of from 40°C to 120°C, preferably from 50 to 90°C such as from 60 to 80°C.

Likewise, the cellulose composition is typically at an elevated temperature when deposited, such as from 40°C to 120°C, preferably from 60 to 110°C such as from 70 to 100°C.

The solvent used in the cellulose composition used to form fibres typically has a low vapour pressure, and despite the typical elevated temperatures may be retained in the fibres unless prolonged drying times are used. To facilitate drying, the fibres are typically washed after deposition to aid in removal of the spinning solvent and aid in curing of the fibre (i.e. crystallisation of the cellulosic polymer).

Typical solvents used to wash (i.e. rinse) the deposited fibres include water, C₁-C₄-alcohols, acetone, cyclic ether such as THF and the like, preferably water, methanol or ethanol, most preferably water.

### Nonwoven Separator

The surface of the electrode active layer may be at room temperature during deposition, or it may be at elevated temperatures. Elevated temperatures are advantageous, as this facilitates rapid drying of the fibre after deposition, and avoids unwanted disruption of the integrity of the underlying electrode active layer.

Typically, deposition will occur after calendering of the electrode active layer. When carried out in an inline process, the electrode active layer will be at an elevated temperature due to the residual heat transferred from the calendering roll.

The electrode active layer may be at a temperature of from 40°C to 120°C, preferably from 50°C to 90°C such as from 60°C to 80°C.

The cellulosic fibres, whether deposited as a dispersion of fibres or formed during a solvent-spinning method, typically have a diameter of from 50 nm to 10,000 nm, for example from 100 nm to 5,000 nm, such as from 250 nm to 3,000 nm, and preferably from 500 nm to 2,000 nm.

The diameter of the cellulosic fibres may be measured using a microscope such as a scanning electron microscope. By measuring the width of 10 fibres, an average diameter may be determined.

Upon deposition of the separator, a porous nonwoven structure forms. The pore size should be sufficiently big so as to allow for sodium ions to penetrate. For example, the pore size may be from 10 nm to 1 µm, such as from 10 nm to 500 nm, for example from 50 nm to 250 nm, such as from 100 nm to 200 nm.

The pore size may be measured using a microscope such as a scanning electron microscope. The pore size is approximated as the longest dimension of a pore as observed in two dimensions (i.e. an image of the nonwoven typically taken from above), for fibres lying in approximately the same plane. Such measurements by their nature will be approximate, as the pores in the nonwoven are typically complex three dimensional spaces formed by multiple fibres. However, by using suitable depth sensitive imaging techniques, it is possible to identify fibres lying in approximately the same plane (i.e. fibres that are in focus wherein the focal depth is similar to the dimensions of the pore) and thus calculate the pore dimensions. By measuring the width of 10 pores, an average diameter may be determined.

The fibre length of fibres formed through deposition can vary depending on the deposition conditions such as distance of the spinneret to the deposition surface, and the viscosity of the solution. However, fibre length of fibres deposited via spray deposition can be controlled, and often it is preferable to use fibres of a certain size to ensure good droplet formation and integrity of the nonwoven which is formed. Staple fibres are therefore commonly used.

After depositing the cellulose composition onto the electrode active layer of a sodium-ion-based electrode, a separator is formed.

The separator does not represent functional weight in a cell. In other words, it does not directly contribute to charge storage. As a consequence, the separator should be thin, and ideally as thin as practical while fulfilling its core function of electrically isolating the anode from the cathode. For example, the separator may have a thickness of from 1 µm to 20 µm, such as from 2 µm to 15 µm, for example from 5 µm to 12 µm.

To measure the thickness of the separator, typically, the composite comprising a foil coated with an electrode active layer and a separator adhered thereon is frozen (i.e. cooled to cryogenic temperatures such as below -80°C). For example, it is subjected to liquid nitrogen. Upon freezing, the composite is cross sectioned for example using a razor. Then the thickness of each layer of the composite (the foil, the electrode active layer and the separator) can easily be measured using suitable means such as an optical or scanning electron microscope.

In some embodiments, a step of calendering is added after deposition of the fibres (i.e. after step b., or step 5.) to form a calendered separator. The calendering may compact the separator as well as result in improved adhesive properties.

The compaction means that typically, the calendered separator will have a thickness which is from 5% to 100% smaller than the thickness of the separator prior to calendering. Additionally, the pore size will typically be from 5% to 50% smaller than the pores of the separator prior to calendering.

Following calendering, a composite comprising a foil coated with an electrode active layer and separator adhered to the electroactive layer is formed, said separator comprising a nonwoven layer of cellulosic fibres.

### ELECTROCHEMICAL CELL

The present disclosure also relates to electrochemical cells comprising the separator of the disclosure.

An electrochemical cell comprises a cathode, an anode, a separator disposed between the anode and cathode, said cathode, anode and separator forming an electrode assembly, the cell further comprising a housing for the electrode assembly.

In the cell of the disclosure, the cathode, the anode, or both, comprises a composite comprising a foil coated with an electrode active layer (i.e. a cathode active layer or an anode active layer) and separator adhered to the electroactive layer, said separator comprising a porous nonwoven layer of cellulosic fibres.

To formulate the cathode and/or the anode of the disclosure into an electrochemical cell, typically, the anode and the cathode (either one or both of which contains an integral separator in accordance with the disclosure) is cut into a shape and size suitable for a cell. As the cell is formed using a composite electrode of the disclosure, there is no need for an additional separator (i.e. a separator that is removable from the cell and not adhered, fused or otherwise bonded to an electrode active layer).

Prior to introduction of the electrolyte, the electrode assembly is typically dried at elevated temperatures, for instance from 60°C to 200°C preferably from 80°C to 150°C for up to 24 hours, typically from 4 hours to 12 hours.

Following drying, an electrolyte is introduced into the housing to surround the electrode assembly. The non-aqueous electrolyte facilitates the transport of lithium ions between the cathode and anode.

Electrolytes used in the sodium iron battery may be comprising sodium compositions, such as sodium salts, e.g. sodium hexafluorophosphate; organic carbonates, e.g. propylene carbonate, ethylene carbonate, vinylene carbonate, ethyl methyl carbonate, dimethylcarbonate, or diethylcarbonate; or any combination thereof.

The housing is typically sealed to ensure the electrolyte is retained within the housing. Said housing usually includes terminals in electrical contact with the anode and composite cathode.

These cells may be combined to form a battery system (i.e. an array of cells), such as a stationary energy storage system, for instance a back-up generator, reserve power source, portable power bank (e.g. suitable for temporary use such as music events), or the like.

The disclosure also relates to an electrical device comprising a cell of the disclosure. For instance, the disclosure relates to a vehicle comprising a cell (or battery system) of the disclosure. The vehicle is preferably an electric vehicle, such as a car, truck, bus, scooter, motorbike, bicycle or the like, preferably a car, truck or bus.

## Claims

1. A process of forming a separator on an electrode active layer of a sodium-ion-based electrode comprising the steps of:
a. providing a cellulose composition comprising solvent and cellulosic material;
b. depositing said cellulose composition on to an electrode active layer of a sodium-ion-based electrode to form a separator;
wherein said separator comprises a nonwoven web of cellulosic fibres.

2. The process of forming a separator of claim 1, wherein the cellulosic material comprises hemicellulose, carboxy methyl cellulose (CMC), regenerated cellulose or a combination thereof.

3. The process of forming a separator of claim 1 or claim 2, wherein the cellulose composition comprises cellulosic material dissolved in a solvent, and wherein the process is a solvent-spinning method.

4. The process of forming a separator of claim 3, wherein the intrinsic viscosity of the cellulosic material in the range of 300 ml/g to 440 ml/g as determined by the SCAN-CM 15:99 method in a cupriethylenediamine solution.

5. The process of claim 3 or claim 4, wherein the solvent comprises N-Methylmorpholine N-oxide (NMMO).

6. The process of claim 1 or claim 2, wherein the cellulose composition comprises fibres of cellulosic material dispersed in a solvent, and wherein the process comprises spraying the cellulose composition on the surface of the electrode active layer.

7. The process of forming a separator of any one of claims 1-6, wherein the electrode is a cathode.

8. The process of forming a separator of claim 7, wherein the cathode comprises PBA.

9. The process of forming a separator of claims 1-6, wherein the electrode is an anode.

10. The process of forming a separator of claim 9, wherein the anode comprises hard carbon.

11. The process of forming a separator of claims 1-9, wherein cellulosic fibres have a diameter of 500 nm to 2000 nm.

12. The process of forming a separator of any preceding claim, wherein the pore size of the nonwoven web is from 10 nm to 500 nm.

13. The process of forming a separator of any preceding claim, wherein the separator has a thickness of from 2 µm to 15 µm.

14. The process of forming a separator of any preceding claim, further comprising c. calendering the nonwoven web after deposition on the electroactive layer.

15. A composite comprising a foil coated with an electroactive layer and a separator adhered thereon, as formed by the method of any preceding claim.

16. A composite comprising
a foil coated with an electroactive layer for a sodium ion cell; and
a separator adhered to the electroactive layer, said separator comprising a nonwoven web comprising cellulosic fibres.

17. A cell comprising the separator of claim 15 or claim 16.

18. A vehicle comprising the cell of claim 17.

19. A stationary energy storage system comprising the cell of claim 17.
